(19) Europäisches Patentamt
European Patent Office
Office européen des brevets

(11) **EP 3 498 463 A1**

(12) **EUROPEAN PATENT APPLICATION**

(43) Date of publication:
**19.06.2019 Bulletin 2019/25**

(51) Int Cl.:
**B29D 29/10** (2006.01)    **B29C 33/44** (2006.01)
**B29C 67/00** (2017.01)

(21) Application number: **17207128.4**

(22) Date of filing: **13.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Leys**
**9320 Erembodegem (BE)**

(72) Inventor: **LEYS, Luc**
**9320 Erembodegem (BE)**

(74) Representative: **Gevers Patents**
**Intellectual Property House**
**Holidaystraat 5**
**1831 Diegem (BE)**

Remarks:
Amended claims in accordance with Rule 137(2) EPC.

(54) **APPARATUS AND METHOD FOR PRODUCING HOLLOW RESHAPABLE ARTICLES**

(57) The invention relates to a method and an apparatus for producing hollow reshapable products (1), the method comprising the consecutive steps of:
• providing a mandrel (2),
• creating a hollow reshapable product (1) lying adjacent to the mandrel outer surface (3) by pressing a slab of reshapable material (4) against the mandrel outer surface (3), and
• removing the reshapable product (1) from the mandrel (2) along a removal direction substantially parallel to the axial direction of the mandrel (2).

Fig. 2

EP 3 498 463 A1

## Description

## Technical Field

The present invention relates to a method for producing hollow reshapable articles, and for easily releasing hollow reshapable articles from a mandrel after being produced. More specifically, the invention relates to a method for producing and releasing grooved rubber drive belts such as micro-V belts. The invention also relates to an apparatus for producing and releasing hollow reshapable articles such as grooved rubber drive belts.

## State of the art

It is known in the state of the art that producing hollow reshapable articles requires the use of a shaping element on which a slab of reshapable material is pressed. It is for example known from patent application CA2929490 to provide a mandrel having a mandrel outer surface on which a slab of reshapable material is applied, for example by winding the slab of reshapable material around the mandrel. The slab of reshapable material is subsequently expanded against the inner surface of a shaping element, for example by pressurizing the space between the mandrel and the slab of reshapable material. The shaping element usually provides heat for example in order to cure the slab of reshapable materials in order to obtain a final hollow reshapable product. The inner surface of the shaping element is usually provided with a set of grooves. Due to the pressing of the slab of reshapable material against the shaping element, the final hollow reshapable product will be provided with the same pattern of grooves. This process is often used when producing rubber drive belts such as v-belts, especially when producing grooved rubber drive belts such as micro-V belts. Micro-V belts, also known as ribbed V belts or multi-V ribbed belts are for example known from patent application EP0625650 and are characterized by their circumferentially grooved pattern as opposed to cogged belts which are typically provided with an axially grooved pattern. This method of the state of the art however is confronted with several disadvantages. Especially when the production of drive belts is pursued, inferior quality is obtained due to the presence of load bearing cords within the driving belt as explained further. When the slab of reshapable material comprising an plastic material provided with a set of load bearing cords is expanded against the inner surface of the shaping element, the cords become tensioned. After curing, and consequential hardening, of the plastic material, the pressurization between the mandrel and the slab of reshapable material is released, causing the load bearing cords to elastically relax. The elastic relaxation of the cords creates residual interface stresses between the load bearing cords and the cured plastic material, which increases the risk on crack formation during use of the drive belts. Furthermore, these processes of the state of the art tend to be economically unviable due to the dual function of the shaping element which functions as a heating element as well as a groove shaping element. Therefore, every time the producer of the hollow plastic products wants to change the shaping element, for example changing the groove pattern on its inner surface, he automatically also changes the heating element which is subject to severe and by consequence expensive examination and inspection procedures.

The state of the art has therefore shifted towards shaping elements being decoupled from the heating elements, and wherein the mandrel outer surface also functions as the shaping element. Such an apparatus is for example known from the patent application US4848720 where the mandrel outer surface is provided with a set of grooves and is configured for receiving the slab of reshapable material. In the apparatus of the state of the art, the slab of reshapable material is subsequently pressed against the mandrel outer surface in order to create the final hollow product, for example provided with the corresponding grooved pattern. A major problem with this apparatus is the increased difficulty and sometimes the impossibility of removing the final hollow reshapable product from the mandrel outer surface, due to the friction between the two elements when moving them with respect to each other along a removal direction. This problem is even more apparent in the production of grooved hollow reshapable products, such as a grooved drive belts such as a micro-V belts, as in these products the grooves additionally hinder the removing of the hollow reshapable product from the mandrel. This is especially true when the grooves lie perpendicular to the removal direction, as is the case when producing micro-V belts. The apparatus of the state of the art therefore provide a collapsible mandrel that allows a part of the mandrel outer surface to move inward of the mandrel such that the hollow reshapable product can be removed from the mandrel without friction. A major disadvantage however exist with the apparatus of the state of the art, due to the collapsible mandrel having a mandrel outer surface which is not continuous but which is required in order to enable a part of the mandrel to be moved inwardly in respect to the adjacent part. The non-continuous surface acts as an opening wherein the slab of reshapable material penetrates when the slab is pressed against the mandrel. This creates unwanted protrusions, such as flanges, on the final hollow reshapable product that have to be cut away afterwards. This has several pejorative consequences on the production process, such as the requirement to provide dedicated cutting machinery to post-process the final hollow reshapable products. Apart from making the process less economical, the machinery also generates high levels of noise, thereby creating discomfort to the workers on the factory floor.

## Detailed description of the invention

It is a goal of the present invention to provide a new process for producing hollow reshapable products, wherein the problem encountered in the state of the art is solved. More specifically, it is a goal of the present invention to provide a process according to the first claim. The process of the present invention therefore provides a method for producing hollow reshapable products, wherein the method comprises the consecutive steps of:

- providing a mandrel substantially extending in an axial direction and delimited by a mandrel outer surface having a cross-section with a plane perpendicular to the axial direction with a first arc length and a first shape,
- applying a slab of reshapable material on the mandrel outer surface,
- creating a hollow reshapable product having an inner surface lying adjacent to the mandrel outer surface by pressing the slab of reshapable material against the mandrel outer surface, and
- removing the reshapable product from the mandrel along a removal direction substantially parallel to the axial direction of the mandrel. The process of the present invention is characterized in that the step of removing the reshapable product comprises the step of reshaping the reshapable product by moving the reshapable product away from the outer mandrel surface in at least one radial direction perpendicular to the removal direction, wherein the cross-section of the inner surface of the hollow reshapable product with a plane perpendicular to the removal direction has a second arc length and a second shape, wherein the second arc length equals the first arc length, and wherein the second shape differs from the first shape.

The process of the present invention has the advantage that the first arc length equals the second arc length while the first shape differs from the second shape such that the hollow reshapable product can be removed from the mandrel with a very low amount of effort. The problem encountered in the state of the art is solved due to the absence of a collapsible mould which creates unwanted protrusions such as flanges on the final hollow product which have to be removed in an expensive subsequent processing step causing nuisance to the working environment. More specifically, the process of the present invention enables the manufacturer to easily remove the hollow product from the mandrel once the final product has been made. As the first shape differs from the second shape, the hollow product can be removed from the mandrel with a limited amount of friction to be overcome between the hollow product inner surface and the mandrel outer surface. This effect is remarkably present when the hollow product comprises grooves defined by protrusions which are congruent with grooves in the mandrel outer surface and which lie in a different direction than, for example perpendicular to, the removal direction, such as is the case when producing grooved drive belts such as micro-v belts. Additionally, only a small effort is required in order to reshape the hollow product from the first shape to the second shape, as the second arc length equals the first arc length i.e. the hollow product does not have to be elastically stretched or plastically deformed in at least one radial direction in order to obtain the second shape. This effect is remarkably present when the hollow product comprises elements with a high elastic modulus for example load bearing elements such as tension cords such as is the case when producing drive belts such as micro-v belts. This effect is also remarkably present when the hollow product comprises grooves defined by protrusions which are congruent with grooves in the mandrel outer surface and which lie in a different direction than, for example perpendicular to, the removal direction, such as is the case when producing grooved drive belts such as micro-v belts. In this case the manufacturer is required to reshape the hollow product such that the protrusions defining grooves of the hollow product are no longer inside of the grooves of the mandrel outer surface.

According to embodiments of the process of the present invention the second shape of the final hollow product differs from the first shape of the mandrel outer surface such that the hollow reshapable product can be removed from the mandrel with reduced friction for example without friction. According to embodiments of the process of the present invention the second shape differs from the first shape such that the second shape does not touch the first shape. This embodiment ensures that when the reshapable product is removed from the mandrel along the removal direction, the friction between the inner surface of the reshapable product and the mandrel outer surface is reduced for example alleviated.

According to embodiments of the process of the present invention the step of reshaping the reshapable product comprises increasing the perpendicular distance between the reshapable product and the mandrel outer surface such that the reshapable product is loosened from the mandrel outer surface. Loosening the reshapable product enables to easily remove the reshapable product from the mandrel for example without friction between the inner surface of the reshapable product and the mandrel outer surface.

According to embodiments of the process of the present invention the first shape of the mandrel outer surface comprises a maximal dimension. The maximal dimension is equal to the length of the line segment defined by two points on the mandrel first shape, which has the biggest length of all line segments in the first shape. According to embodiments of the process of the present invention, the second shape is a circle having a diameter at least bigger than the maximal dimension of the first shape. This embodiment guarantees that the reshapable product can be easily removed from the mandrel as the friction between the inner surface of the reshapable product and the mandrel outer surface is reduced for example alleviated.

According to embodiments of the process of the present invention, the first shape of the mandrel outer surface is the same during the step of creating the hollow reshapable product and during the step of removing the reshapable product. This embodiment clarifies that the mandrel is not collapsible. The advantage of the present embodiment is that a mandrel having the same first shape during the entire manufacturing process yields higher quality products. The requirement of providing a mandrel whose outer surface shape, i.e. first shape, remains the same, allows to make a rigid mandrel. A rigid mandrel tends to increase the reproducibility of the manufacturing process, even after a great number of production cycles as the tolerances obtained on the rigid mandrel are much smaller and less prone to change than the tolerances obtained on a non-rigid mandrel such as on a flexible mandrel. The inventors have found that providing a mandrel according to the present invention enables to use the same mandrel for at least 1000 production cycles i.e. 1000 cycles of creation of the product and removal of the product. The effect is particularly present when the mandrel is provided with a grooved pattern, as the grooves on a rigid mandrel tend to be less prone to deformation over time, for example due to the application of high pressures during the product creation process, with respect to the grooves on a flexible mandrel. Furthermore, the requirement of providing a mandrel whose outer surface shape, i.e. first shape, remains the same, allows to provide a mandrel without moving parts. Providing a mandrel without moving parts allows to provide cheaper mandrels, which are generally less prone to breakage. Furthermore, a mandrel without moving parts alleviates the formation of unwanted protrusions such as flanges on the final hollow reshapable product, which unwanted protrusions tend to be formed due to the penetration of the slab of reshapable material in the openings of the mandrel which are required in order to separate to movable and immobile parts of the mandrel.

According to embodiments of the process of the present invention the second shape encloses the first shape. The present embodiment clarifies that the step of removing the reshapable product comprises reshaping the product to a second shape which is larger than the first shape.

According to embodiments of the process of the present invention the first shape of the mandrel outer surface is a continuous shape. A continuous shape within the context of the present invention defines a shape being uninterrupted i.e. comprising an uninterrupted connection of points. According to embodiments of the process of the present invention the mandrel outer surface is a continuous surface, defined as a surface being uninterrupted i.e. comprising an uninterrupted connection of points. The present embodiment clarifies that the mandrel outer surface is made from one part as opposed to constructed from at least two parts such as a moveable and an immobile part. The advantage of the present embodiment is that no unwanted protrusions such as flanges are formed on the final hollow reshapable product, which unwanted protrusions tend to be formed due to the penetration of the slab of reshapable material in the discontinuities of the mandrel outer surface.

According to embodiments of the process of the present invention the mandrel axial direction is the elongated direction of the mandrel. According to an embodiment of the present invention the mandrel outer surface of the mandrel defines at every position along the axial direction of the mandrel a first shape in a cross-section with a plane perpendicular to the axial direction. According to an embodiment of the process of the present invention the first shapes of the mandrel outer surface at every position along the axial direction of the mandrel, are the same. Providing a mandrel with such first shape along the axial direction makes the removal of the reshapable product from the mandrel easier, as the reshapable product must not be reshaped similarly at every position along the axial direction of the mandrel.

According to embodiments of the process of the present invention the first shape of the mandrel outer surface is concave. Providing a concave first shape enables the manufacturer to reshape the reshapable product from a first position wherein the inner surface has the first shape to a second position wherein the inner surface has the second shape which differs from the first shape, as the reshapable product can be moved out of the at least one concave part of the mandrel, thereby forming a less concave second shape. The manufacturer moves the reshapable product in at least one radial direction perpendicular to the removal direction, wherein the radial direction is a direction that causes the concavity of the reshapable product to decrease. The manufacturer is able to reshape the reshapable product, which has moved out of the concave part of the mandrel, in order to bring the inner surface of the reshapable product in the second shape. The manufacturer can subsequently easily remove the reshapable product form the mandrel along the removal direction with reduced friction for example without friction.

According to embodiments of the process of the present invention the first shape of the mandrel outer surface is a circle provided with at least one indented part. Providing the first shape of the mandrel outer surface as a circle provided with at least one indentation has the advantage of having a mandrel with a high surface to volume ratio i.e. a large surface for the creation of the product, whilst still providing a concave part required for the easy removal of the reshapable product from the mandrel. In an embodiment of the present invention the first shape of the mandrel outer surface is a circle provided with at least one oscillation, for example a gradual oscillation such as for example a sinusoidal oscillation, along the circumference of the circle.

According to embodiments of the process of the present invention, the mandrel is a rigid mandrel. A rigid mandrel as opposed to a flexible mandrel is a mandrel that does not deform. A rigid mandrel tends to increase the reproducibility of the manufacturing process, even after a great number of production cycles as the tolerances of the products obtained on the rigid mandrel are much smaller and less prone to change than the tolerances of products obtained on a non-rigid mandrel such as on a flexible mandrel. According to embodiments of the process of the present invention the mandrel is made out of metal, by preference out of steel. Providing a mandrel made out of steel, has the advantage of providing a rigid mandrel.

According to embodiments of the process of the present invention, the arc length is defined as the length along a curve. A shape such as the first shape or second shape of respectively the mandrel outer surface and the reshaped reshapable product, are delimited by a closed curve. The arc length of such as shape, such as the first arc length or second arc length of respectively the first shape and the second shape, are defined as the length along the closed curves delimiting the shape.

According to embodiments of the process of the present invention, the second arc length of the reshaped reshapable product is greater than the first arc length. The manufacturer of the reshapable product may for example elastically or plastically stretch the reshapable product in order to additionally loosen the reshapable product from the mandrel.

According to embodiments of the process of the present invention the mandrel outer surface is provided with at least one groove penetrating the mandrel outer surface with a maximal groove depth. According to embodiments of the process of the present invention the mandrel outer surface is provided with a set of grooves penetrating the mandrel outer surface with a maximal groove depth. Providing the mandrel outer surface with at least one groove has the advantage that the slab of reshapable material, when pressed against the mandrel outer surface, penetrates the grooves of the mandrel outer surface. The present process enables to create a reshapable product provided with at least one protrusion, for example a set of protrusions, corresponding to at least one groove provided in the mandrel outer surface. The at least one protrusion provided on the hollow reshapable product separates the hollow reshapable product in a base part and a grooved part separated by an interface layer running along the base of the protrusions. The protrusions provided in the hollow reshapable product thereby define grooves in the grooved part of the hollow reshapable product. A mandrel outer surface which is provided with one protrusion is interpreted to be a mandrel outer surface provided with two grooves. Similarly, a mandrel outer surface which is provided with multiple protrusions is interpreted as a mandrel outer surface provided with multiple grooves. In case the protrusions which have been provided on the mandrel outer surface have different heights, the protrusion having the maximal protrusion height creates a corresponding groove having the maximal groove depth in the hollow reshapable product and separates the hollow reshapable product in a base part and a grooved part separated by an interface layer running along the base of the groove having the maximal groove depth and preferably parallel to the mandrel outer surface and to the inner surface. According to embodiments of the process of the present invention at least a part of the grooves provided in the mandrel outer surface lie along a direction different from the removal direction. According to embodiments of the process of the present invention at least a part of the grooves provided in the mandrel outer surface lie at least partly in a plane perpendicular to the removal direction. According to embodiments of the process of the present invention, the set of grooves provided in the mandrel outer surface define one of a drawing and a regular pattern. According to an embodiment of the process of the present invention, the grooves are circumferential grooves lying in equidistant planes perpendicular to the removal direction. Such circumferential grooves for example enable the production of micro-V belts. According to an embodiment of the process of the present invention, the grooves are axial grooves lying along the axial direction. Such axial grooves for example enable the production of cogged belts. According to embodiments of the process of the present invention the second shape is larger than the first shape by a perpendicular distance greater than the maximal groove depth. The embodiment has the advantage that the manufacture is able to reshape the reshapable product to a second shape wherein the protrusions defining the grooves created in the reshapable product have exited the corresponding grooves provided in the mandrel outer surface. The embodiment has the advantage that the manufacturer is able to remove the reshapable product from the mandrel along the removal direction without friction or interference of the grooves created in the reshapable product with the corresponding grooves provided in the mandrel. The advantage is particularly visible when at least part of the grooves lie along a direction different from the removal direction. According to embodiments of the process of the present invention the hollow reshapable product is a grooved product. According to embodiments of the process of the present invention the grooved product comprises after being pressed against the mandrel outer surface, a base part and a grooved part linked by an interface layer, wherein the cross-section of the interface layer of the reshaped grooved product with a plane perpendicular to the removal direction has a third arc length and a third shape. According to embodiments of the process of the present invention, the inner surface of a grooved reshapable product is defined as the interface layer of the grooved reshapable product. When the hollow reshapable product is a grooved product, the second arc length and second shape are thus respectively equal to the third arc length and third shape.

According to embodiments of the process of the present invention the step of applying a slab of reshapable material on the mandrel outer surface comprises applying a slab of plastic material such as a slab of rubber or polyurethane on the mandrel outer surface. According to embodiments of the process of the present invention the step of applying a slab of reshapable material on the mandrel outer surface comprises applying uncured curable plastic material such as a slab of uncured rubber on the mandrel outer surface. By applying a slab of plastic material on the mandrel outer surface, the process of the present invention results in the manufacturing of a hollow plastic product. The advantage of applying uncured curable plastic material such as uncured rubber on the mandrel outer surface is that during the step of creating the reshapable product a grooved pattern can be created in the plastic material, before the material is cured i.e. when the material is still sufficiently soft to penetrate the grooves provided on the mandrel outer surface. After the creation of the grooved pattern, the uncured curable plastic material can be cured such that a cured grooved plastic product is obtained.

According to embodiments of the process of the present invention the step of applying a slab of reshapable material on the mandrel outer surface comprises winding consecutive layers of material around the mandrel. The consequently winding of layers around the mandrel provides an easy way of manufacturing the reshapable product. According to embodiments of the present invention the step of applying a slab of reshapable material on the mandrel outer surface comprises consecutively winding at least a thermoplastic layer and a load carrying layer around the mandrel. The load carrying layer may for example be a plastic material comprising a set of load carrying cords such as metallic cords. The consequently winding of at least a thermoplastic layer followed by a load carrying layer around the mandrel has the advantage of providing a thermoplastic material adjacent to the mandrel outer surface, which thermoplastic material can easily deform whilst being pressed against the mandrel outer surface such that the material can easily penetrate the grooves provided in the mandrel outer surface and subsequently take on a similar grooved pattern.

According to an alternative embodiment of the process of the present invention, the step of applying a slab of reshapable material on the mandrel outer surface comprises sliding a wound slab of reshapable material, by preference a hollow and annular wound slab of reshapable material, over the mandrel in a mounting direction, parallel to the removal direction. Sliding a wound slab of reshapable material over the mandrel has the advantage that the slab of reshapable material can be wound preceding to the process of the present invention.

According to embodiments of the process of the present invention the step of applying a slab of reshapable material on the mandrel outer surface comprises making the slab of reshapable material and the mandrel outer surface substantially congruent. More specifically, the slab of reshapable material is made congruent with the mandrel outer surface by pressing the slab of reshapable material within the concave part of the mandrel outer surface. According to embodiments of the process of the present invention the slab of reshapable material is made congruent with the mandrel outer surface by pressing the slab against the mandrel outer surface with a roller configured for rolling over the mandrel outer surface. Making the slab of reshapable material congruent with the mandrel outer surface enables the manufacturer to ensure that the inner surface of the reshapable material lies adjacent to the mandrel outer surface prior to the step of creating the reshapable product. The entire slab of reshapable material comprising but not limited to the inner surface, applied to the mandrel outer surface thus has a similar shape as the first shape of the mandrel outer surface.

According to embodiments of the process of the present invention the step of creating a hollow reshapable product comprises providing an external shell enclosing the slab of reshapable material applied to the mandrel outer surface, the step further comprises providing pressure to the slab of reshapable material with the external shell. The provision of pressure within the external shell causes the slab of reshapable material to be pressed against the mandrel outer surface, thereby for example creating a grooved pattern in the reshapable material. According to embodiments of the process of the present invention, the step of creating the hollow reshapable product comprises mechanically pressing the external shell against the slab of reshapable material in order to apply pressure on the material. According to an alternative embodiment of the process of the present invention, the step of creating the hollow reshapable product comprises providing pressure within the external shell. The external shell can for example function as an autoclave providing a pressurized atmosphere around the slab of reshapable material. It is preferred that the slab of reshapable material in this embodiment, is covered with a pressure bag enabling the slab of reshapable material to be pressurized without directly subjecting the slab of reshapable material to the pressurized atmosphere as such an atmosphere, for example pressurized steam, could deteriorate the quality of the material. According to embodiments of the process of the present invention the step of creating a hollow reshapable product comprises providing an external shell enclosing the slab of reshapable material applied to the mandrel outer surface, the step further comprises providing heat and pressure to the slab of reshapable material with the external shell. According to embodiments of the process of the present invention, the provision of heat and pressure within the external shell cures the uncured curable material. According to embodiments of the present invention, the external shell is heated in order to increase the temperature of the external shell in contact with the slab of reshapable material. According to an alternative embodiment of the present invention, the external shell is heated in order to increase the temperature of the pressurized atmosphere within the external shell. The advantage of the present invention is that a single external shell can be used for different mandrels, for example for mandrels having different groove patterns. This allows for example the single external shell to undergo a single audit procedure, checking its performance with respect to a set of standards.

According to embodiments of the process of the present invention the hollow reshapable product is an annular reshapable product.

According to embodiments of the process of the present invention the step of creating the hollow reshapable product is followed by cutting the hollow reshapable products along a set of equidistant planes perpendicular to the removal direction. The cutting of the hollow reshapable product has the advantage that multiple annular sub-products can be made from the hollow reshapable product.

According to embodiments of the process of the present invention the hollow reshapable product is at least one drive belt, by preference a rubber drive belt, by preference a micro-V belt. According to embodiments of the process of the present invention, the sub-products obtained after cutting the hollow reshapable product are annular driving belts.

It is a further aim of the present invention to provide an apparatus for producing a hollow reshapable product according to the method of the present invention. The present invention therefore provides an apparatus comprising a mandrel substantially extending in an axial direction and delimited by a mandrel outer surface having in a cross-section with a plane perpendicular to the axial direction a concave first shape. The advantage of the apparatus of the present invention is that the apparatus enables facilitated removal of the products created on the mandrel outer surface, for example requiring low amounts of force for example due to the reduced, for example the absence of, friction between the hollow reshapable product and the mandrel outer surface. More specifically, the apparatus of the present invention allows the facilitated removal of products without having to provide a collapsible mandrel as presented in the state of the art.

According to embodiments of the apparatus of the present invention the first shape of the mandrel outer surface is a continuous shape. A continuous shape within the context of the present invention defines a shape being uninterrupted i.e. comprising an uninterrupted connection of points. According to embodiments of the present invention the mandrel outer surface is a continuous surface, defined as a surface being uninterrupted i.e. comprising an uninterrupted connection of points. The present embodiment clarifies that the mandrel outer surface is made from one part as opposed to constructed from at least two parts such as a moveable and an immobile part.

According to embodiments of the apparatus of the present invention the first shape of the mandrel outer surface is a circle provided with at least one indented part, by preference provided with oscillations, such as for example a gradual oscillation, such as for example a sinusoidal oscillation, along the circumference of the circle. The advantage the present embodiment is that a mandrel is provided with a high surface to volume ratio which provides a large surface for the creation of the reshapable product, whilst still providing a concave part required for the facilitated removal of the reshapable product from the mandrel.

According to embodiments of the apparatus of the present invention the mandrel axial direction is the elongated direction of the mandrel. According to an embodiment of the present invention the mandrel outer surface of the mandrel defines at every position along the axial direction of the mandrel a first shape in a cross-section with a plane perpendicular to the axial direction. According to an embodiment of the present invention the first shapes of the mandrel outer surface at every position along the axial direction of the mandrel, are the same.

According to embodiments of the apparatus of the present invention the mandrel is a rigid mandrel. A rigid mandrel as opposed to a flexible mandrel is a mandrel that does not deform. A rigid mandrel tends to increase the reproducibility of the manufacturing process, even after a great number of production cycles as the tolerances on the rigid mandrel are much smaller and less prone to change than the tolerances on a non-rigid mandrel such as on a flexible mandrel. According to embodiments of the present invention the mandrel is made out of metal, by preference out of steel. Providing a mandrel made out of steel, has the advantage of providing a rigid mandrel.

According to embodiments of the apparatus of the present invention the mandrel outer surface is provided with at least one groove penetrating the mandrel outer surface with a maximal groove depth. According to embodiments of the apparatus of the present invention the mandrel outer surface is provided with a set of grooves penetrating the mandrel outer surface. According to embodiments of the apparatus of the present invention at least a part of the grooves provided in the mandrel outer surface lie along a direction different from the axial direction. According to embodiments of the apparatus of the present invention at least a part of the grooves provided in the mandrel outer surface lie at least partly in a plane perpendicular to the axial direction. According to embodiments of the apparatus of the present invention, the set of grooves provided in the mandrel outer surface define one of a drawing and a regular pattern. According to an embodiment of the apparatus of the present invention, the grooves are circumferential grooves lying in equidistant planes perpendicular to the axial direction.

According to embodiments of the apparatus of the present invention the apparatus comprises a roller configured for rolling over the mandrel outer surface such as to make a slab of reshapable material applied to the mandrel outer surface substantially congruent with the mandrel outer surface.

According to embodiments of the apparatus of the present invention the apparatus comprises an external shell configured for enclosing the mandrel outer surface, and configured for providing pressure on the slab of reshapable material with the external shell. According to embodiments of the apparatus of the present invention the external shell is configured for providing heat and pressure on the slab of reshapable material with the external shell. According to embodiments of the apparatus of the present invention, the external shell is a pressing device having a shape similar to the shape of the mandrel and configured for directly pressing the slab of reshapable material against the mandrel outer surface. According to an alternative embodiment of the apparatus of the present invention the external shell is an autoclave.

According to embodiments of the apparatus of the present invention the apparatus comprises cutting means configured for cutting the hollow reshapable products along a set of equidistant planes, for example perpendicular to the removal direction.

**Figures**

    Figure 1 shows a circumferential cross-section of a micro-v belt.
    Figure 2 shows an example embodiment of a mandrel of the present invention.
    Figure 3 shows a cross-section of the mandrel outer surface with a plane perpendicular to the axial direction.
    Figures 4a to 4d show alternative first shapes of the cross-section of the mandrel outer surface with a plane perpendicular to the axial direction.
    Figure 5 shows a circumferential cross-section of an annular slab of reshapable material.
    Figure 6 shows the slab of reshapable material applied to the mandrel outer surface.
    Figure 7 shows the mandrel enclosed by the external shell.
    Figure 8 shows the removal of the hollow reshapable product from the mandrel.
    Figure 9 shows an extreme case of reshaping of the hollow reshapable product.

**Description of the figures**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

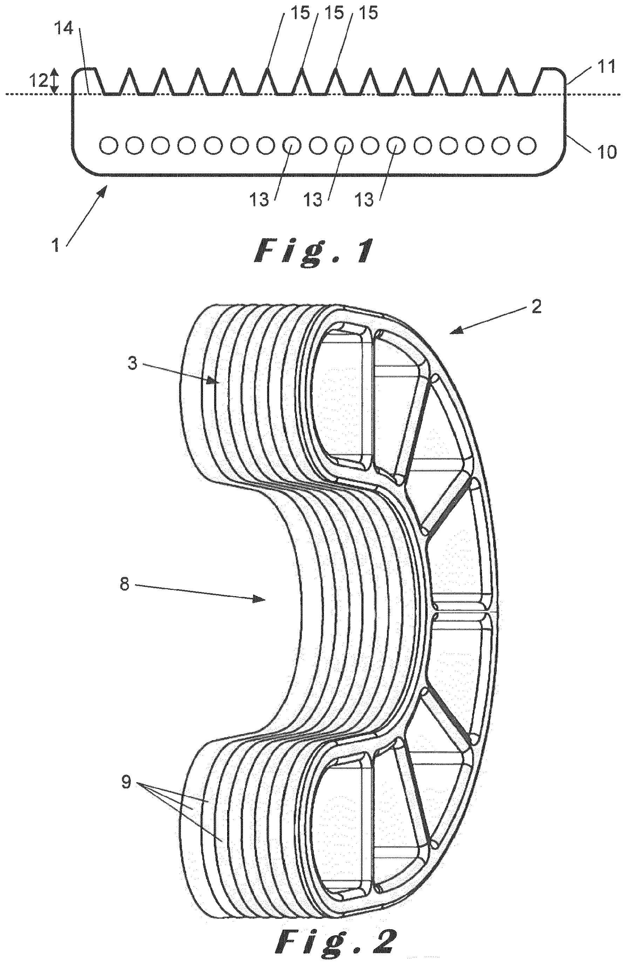

The method of the present invention aims to provide a method which facilitates the production of, and more specifically the removal of produced hollow reshapable products. Reshapable as defined in the present invention means that the product can be brought in another shape without requiring substantial plastic or elastic deformation. The reshapable product reshaped to a second shape therefore does not return elastically to its original shape after deformation. A reshapable product is a flexible product. The reshapable product could however also be deformed plastically or elastically by the application of the required forces, causing stress within the product which causes substantial plastic or elastic deformation. More specifically, the method of the present invention provides a method for producing driving belts, such as rubber driving belts. Driving belts are annular rubber products which have a closed loop surface. Figure 1 shows an example of a hollow reshapable product 1 as an annular grooved rubber driving belt, more specifically as a micro-V belt. Micro-V belts, also known as ribbed V belts or multi-V ribbed belts are annular rubber driving belts defined by a set of protrusions 15 delimiting a set of grooves, whereby the protrusions 15 extend in the circumferential direction along the annular rubber driving belt. The protrusions 15 increase the friction between the driving belt and the gears which the driving belts drive. Due to the increased resistance, the translation of the driving belt is efficiently transmitted to a rotation movement of the gears. Cogged driving belts differ from micro-V belts, in that the set of protrusions in cogged belts extend in an axial direction of the annular rubber driving belt. Cogged driving belts also drive gears, but rely less on the friction between the belt and the gears and rely more on the engagement of a protrusion-groove set between the driving belt and the gear. The hollow reshapable product 1 in figure 1 shows a circumferential cross-section of a micro-v belt. The product 1 comprises a base part 10 and a grooved part 11 separated by an interface layer 14 running along the base of the set of protrusions 15. The base part 10 comprises a rubber material provided with load carrying cords 13 such as steel cords configured for reinforcing the driving belt for example by taking up the tension stresses occurring within the belt in use. The grooved part 11 is a layer of rubber material comprising the set of protrusions 15. The set of protrusions 15 define the grooves of the grooved part 11. Each protrusion in the set of protrusions 15 as shown in figure 1 has the same height, equal to the maximal groove depth 12 or reciprocally the maximal protrusion height.

The figures 2 - 9 illustrate a process according to the present invention, for producing the hollow reshapable products 1 as presented in figure 1. The process of the present invention comprises a series of consecutive steps to be performed by a manufacturer of the hollow reshapable products.

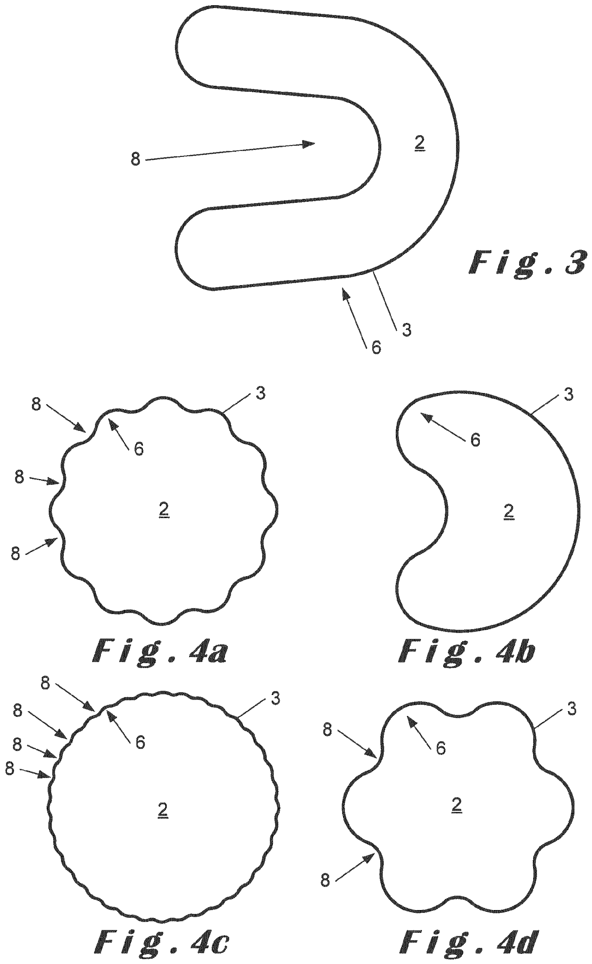

As a first step, the manufacturer provides a mandrel being configured as an applying element for applying a slab of reshapable material, as a shaping element for giving the slab of reshapable material a certain shape, and as a mould for curing the slab of reshapable material. Figure 2 shows an example embodiment of a mandrel 2 of the present invention. The mandrel 2 as presented in figure 2 is a rigid mandrel, for example made of steel such as made from a "1.2312" steel. The mandrel 2 of the embodiment shown in figures 2 - 9 has a concave shape, for example due to the presence of an indented part, referred to as the concave part 8 of the mandrel 2. The mandrel 2 is further defined by a mandrel outer surface 3 configured for receiving a slab of reshapable material. The mandrel outer surface 3 is provided with a set of grooves 9, configured for creating a corresponding pattern of protrusions 15 defining grooves in the final hollow reshapable product, such as configured for creating the circumferential protrusions 15 defining the circumferential grooves of the micro-V belt. The grooves 9 provided in the mandrel outer surface 3 have a maximal groove depth substantially equal to the required groove depth 12 in the final hollow reshapable product 1. The mandrel outer surface 3 is a continuous closed surface created by projecting a closed curve along an axial direction for example the elongated direction. Although the axial direction of the mandrel 2 may change instantly along the mandrel, the axial direction is generally constant and defined as the direction between the suspension points of the mandrel 2. Although the closed curve of the mandrel 2 may change its shape along the axial direction, the shape of the closed curve is generally constant along the axial direction as is shown in figure 2. Figure 3 shows the closed shape of the mandrel 2. More specifically, figure 3 shows a cross-section of the mandrel outer surface 3 with a plane perpendicular to the axial direction. Figure 2 shows the first shape 6 of the mandrel outer surface 3 at any position along the axial direction as the first shape 6 of the mandrel outer surface 3 is the same along the axial direction. The first shape 6 has a convex part 8 making the first shape 6 a concave shape. The first shape 6 in figure 2 comprises two similar curves, for example nearly parabolic curves, separated by a predetermined distance and connected one to the other. The first shape 6 in figure 2 is referred to as a double-U-shape or a double C-shape depending on the curvature of the two curves. Figures 4a to 4d show alternative first shapes 6 of the cross-section of the mandrel outer surface 3 with a plane perpendicular to the axial direction. Figures 4a to 4d show first shapes 6 of the mandrel outer surface 3 wherein the first shapes 6 are circles provided with at least one indented concave part 8. Figure 4b shows a first shape 6 wherein the first shape 6 is a circle provided with one concave part 8. Figures 4a, 4c and 4d show first shapes 6 wherein the first shapes 6 are provided with a sinusoidal oscillation along the circumference of the circle. The sinusoidal oscillation provides the first shape 6 with multiple intended concave parts 8. The period of the sinusoidal oscillation may vary between low periods as shown in figure 4c and high periods as shown in figure 4d. An intermediate period of oscillation is shown in figure 4a. The period of oscillation may be adapted by the manufacturer based on multiple factors such as the ease of producing mandrels 2 with those first shapes 6 and based on the stiffness of the slab of reshapable materials to be applied to the mandrel outer surface 3. The application of slabs with a higher stiffness is for example facilitated if the period of oscillation of the mandrel outer surfaces 3 first shape 6 is increased. Additionally, the first shape 6 of the mandrel outer surface 3 may be adapted to resemble as close as possible the shape required for the final hollow reshapable product 1. Although the final hollow reshapable product being a reshapable product, it is inevitable that a minor elastic effect in the shape as produced remains. In the case of driving belts as shown in figure 1, a shape resembling the first shape 6 as shown in figure 4b is preferred over the shape resembling the first shape 6, because driving belts in use will be easier installed when its shape is elongated rather than circular. Furthermore, the presence of an oscillation in the final shape of the driving belt would reduce the efficiency by which the driving belt is able to drive gears. Every closed curve shown in the figures 3 and 4a - 4d has a first shape 6 and a corresponding first arc length.

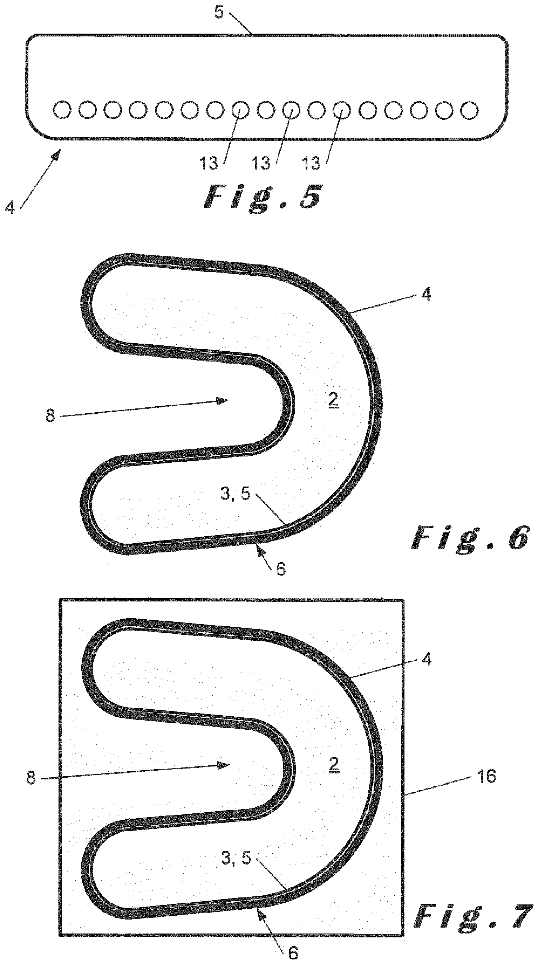

A consecutive step of the process comprises applying a slab of reshapable material to the mandrel outer surface 3. Figure 5 shows a circumferential cross-section of an annular slab of reshapable material 4. The slab of reshapable material 4 is the starting product from which the final hollow reshapable product 1 will be manufactured. The slab of reshapable material 4 therefore comprises the same rubber material as the final hollow reshapable product 1 such as the micro-V belt shown in figure 1. The rubber material has been embedded with load carrying cords 13 such as steel cords configured for reinforcing the driving belt for example by taking up the tension stresses occurring within the belt in use. The slab of reshapable material 4 does not contain a grooved part comprising protrusions defining grooves as these still have to be created in a further step. Instead of a grooved part, the slab of reshapable material has a substantially inner surface 5 without protrusions or grooves. The slab of reshapable material 4 is subsequently applied to the mandrel outer surface 3 as shown in figure 6. The slab of reshapable material 4 may for example be wound in around the mandrel outer surface 3 in consecutive layers. It is however an advantage of the present invention that a slab of reshapable material 4 may be wound prior to the application of the slab of reshapable material 4 on the mandrel outer surface 3. The manufacturer can slide the slab of reshapable material 4 over the mandrel 2 in a direction substantially parallel to the axial direction of the mandrel 2. The process of sliding the slab of reshapable material 4 over the mandrel 2 is facilitated by the reduction for example the alleviation of friction between the inner surface 5 of the slab of reshapable material 4 and the mandrel outer surface 3. Independent if the slab of reshapable material 4 is wound around the mandrel outer surface 3 or slide over the mandrel 2, the slab of reshapable material 4 is subsequently made congruent with the mandrel outer surface 3 for example by manually pressing the slab 4 towards the mandrel outer surface 3 for example by pressing the slab 4 within the congruent part 8. As shown in figure 6, after this step the inner surface 5 of the slab 4 lies adjacent to the mandrel outer surface 3, both having substantially the same first shape 6 and first arc length.

A consecutive step of the process comprises providing an external shell 16 around the mandrel 2 such that the external shell 16 encloses the mandrel outer surface 3 provided with the slab of reshapable material. Figure 7 shows the mandrel 2 enclosed by the external shell 16. The external shell 16 is configured for providing pressure to the slab of reshapable material. The external shell 16 may for example physically press the slab of reshapable material 4 against the mandrel outer surface 3. The shell 16 therefore preferably has a shape substantially similar, for example congruent to the mandrel outer surface 3. The external shell 16 may therefore comprise multiple separate elements to be applied subsequently to the slab of reshapable material 4 applied on the mandrel outer surface 3. Figure 7 shows an alternative embodiment, wherein the external shell 16 functions as an autoclave by pressurizing the space between the external shell 16 and the slab of reshapable material 4. In this alternative embodiment, the slab of reshapable material 4 is preferably encapsulated by a protective sheet, separating the slab 4 from the pressurized atmosphere within the shell 16 as such a pressurized atmosphere, for example steam, may otherwise deteriorate the quality of the material such as the rubber. In any case, the pressure applied to the slab of reshapable material 4 ranges between 0 and 40 bar. Under influence of the pressure, the slab 4 is pressed against the mandrel outer surface 3. Due to the pressure the slab 4 enters the grooves 9 provided on the mandrel outer surface 3 and plastically deforms, thereby creating the protrusions 15 defining a set of grooves substantially congruent with the grooves 9 of the mandrel outer surface 3. If the rubber material of the slab of reshapable material 4 is an uncured curable rubber, the external shell 16 preferably also provides sufficient heat in order to cure the rubber under influence of the pressure and heat. The slab of reshapable material 4 is preferably heated by direct contact of the slab 4 with the heated shell 16. Figure 7 shows an alternative embodiment, wherein the slab 4 is indirectly heated by the heated and pressurized atmosphere within the shell 16. Preferably, the slab of reshapable material is subjected to a temperature of up to 400°C. Following the application of the pressure, and if required the temperature, the slab of reshapable material 4 is converted into the final hollow reshapable product 1 as shown in figure 1. It is noted that due to the plastic deformation of the slab of reshapable material 4, the inner surface 5 has disappeared and has been replaced by a set of protrusions 15 defining a grooved part 11 delimited from a base part 10 by an interface layer 14. The interface layer 14 of the final hollow reshapable product 1, when viewed in a cross-section with a plane perpendicular to the axial direction, has a first shape 6 and first arc length equal to that of the mandrel outer surface 3 whereto the interface layer 14 lays adjacently.

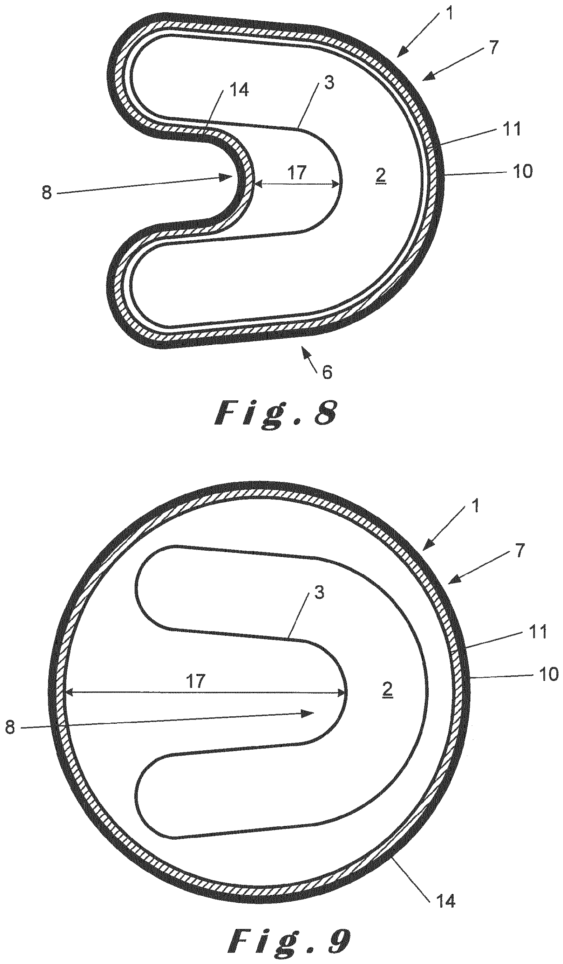

A consecutive step of the process comprises removing the final hollow reshapable product 1 from the mandrel 2. To that end, the external shell 16 is removed enabling the manufacturer to access the hollow reshapable product 1. The manufacturer subsequently reshapes the hollow reshapable product 1 by moving the reshapable product 1 away from the outer mandrel surface 3 in at least one radial direction perpendicular to the removal direction for example by pulling the product 1 away from the mandrel outer surface 3. Figure 8 shows the removal of the hollow reshapable product 1 from the mandrel. No matter where the manufacturer decides to pull the product 1, the product 1 will move out of the concave part 8 of the mandrel 2, as indicated by distance 17. The manufacturer continues to move the product 1 away from the mandrel outer surface 3, until the interface layer 14 of the grooved product 1 has a second shape 7 different from the first shape 6 of the mandrel outer surface 3. The manufacturer is not required to use much force for the reshaping step, as the second shape 7 of the interface layer 14 has a second arc length equal to the first arc length i.e. the product 1 is not stretched elastically or deformed plastically in this step. The manufacture chooses the second shape 7 such that the second shape 7 has a perpendicular distance with the first shape 6 of at least the maximal groove depth 12 all along the second shape 7. Figure 8 shows how the grooved part 11, which is delimited from the base part 10 by the interface layer 14, has exited the mandrel outer surface 3. As a consequence of the reshaping, the final hollow reshapable product 1 is thus loosened from the mandrel outer surface 3 without requiring the application of substantial force by the manufacturer. The manufacturer is subsequently able to remove the product 1 form the mandrel 2 in a removal direction substantially parallel to the axial direction, with reduced or now friction between the product 1 and the mandrel outer surface 3. Figure 9 shows an extreme case of reshaping of the hollow reshapable product 1, where the manufacturer has moved the product 1 entirely out of the concave part 8 as indicated by distance 17. In the extreme reshaping case of figure 9 the product has been reshaped to a circle. It is noted that this case of extreme reshaping can be automated for example by creating a vacuum around the product 1, for example by creating a vacuum inside the external shell 16 as embodied in figure 7 before removing the external shell 16. Alternatively, the space between the mandrel outer surface 3 and the product 1 can be pressurized in order to move the product 1 away from the mandrel outer surface 3. It is noted that the first shape 6 of the mandrel outer surface 3 comprises a maximal dimension, $D_{max}$. The maximal dimension, $D_{max}$, is equal to the length of the line segment defined by two points on the mandrel first shape 6, which has the biggest length of all line segments in the first shape 6. In an embodiment of the present invention as shown in figure 9, the second shape 7 is a circle having a diameter at least bigger than the maximal dimension of the first shape 6. This embodiment guarantees that the reshapable product 1 can be easily removed from the mandrel 2 as the friction between the interface layer 14 of the reshapable product 1 and the mandrel outer surface 3 is reduced for example alleviated. It can be shown that the mandrels 2 of the present invention, in order to obtain the embodiment as illustrated in figure 9, wherein the product 1 is reshaped to a circle enclosing the mandrel outer surface 3, the mandrel outer surface 3 is designed such that the following law is obeyed, independent of the first shape 6 of the mandrel outer surface 3:

$$\frac{l}{2d + D_{max}} \geq \pi$$

, wherein I equals the first arc length of the first shape 6 of the mandrel outer surface 3, wherein $D_{max}$ is the maximal dimension of the mandrel outer surface 3 and wherein d is the maximal groove depth 12.

**Claims**

1.  A method for producing hollow reshapable products (1), the method comprising the consecutive steps of:

    • providing a mandrel (2) substantially extending in an axial direction and delimited by a mandrel outer surface (3) having a cross-section with a plane perpendicular to the axial direction with a first arc length and a first shape (6),
    • applying a slab of reshapable material (4) on the mandrel outer surface (3),
    • creating a hollow reshapable product (1) having an inner surface (5) lying adjacent to the mandrel outer surface (3) by pressing the slab of reshapable material (4) against the mandrel outer surface (3), and
    • removing the reshapable product (1) from the mandrel (2) along a removal direction substantially parallel to the axial direction of the mandrel (2),

    **characterized in that**
    the step of removing the reshapable product (1) comprises the step of reshaping the reshapable product (1) by moving the reshapable product (1) away from the outer mandrel surface (3) in at least one radial direction perpendicular to the removal direction, wherein the cross-section of the inner surface (5) of the hollow reshapable product (1) with a plane perpendicular to the removal direction has a second arc length and a second shape (7), wherein the second arc length equals the first arc length, and wherein the second shape (7) differs from the first shape (6).

2.  The method according to claim 1, wherein the first shape (6) of the mandrel outer surface (3) is the same during the step of creating the hollow reshapable product (1) and during the step of removing the reshapable product (1).

3.  The method according to anyone of the preceding claims, wherein the second shape (7) encloses the first shape (6).

4.  The method according to any one of the preceding claims, wherein the first shape (6) of the mandrel outer surface (3) is a continuous shape.

5.  The method according to any one of the preceding claims, wherein the first shape (6) of the mandrel outer surface (3) is concave.

6.  The method according to any one of the preceding claims, wherein the first shape (6) of the mandrel outer surface (3) is a circle provided with at least one indented part (8), by preference provided with at least one sinusoidal oscillation along the circumference of the circle.

7.  The method according to any one of the preceding claims, wherein the mandrel outer surface (3) is provided with a set of grooves (9) penetrating the mandrel outer surface (3) with a maximal groove depth (12).

8. The method according to the preceding claim, wherein the grooves (9) at least partly lie in a plane perpendicular to the removal direction.

9. The method according to the preceding claim, wherein the grooves (9) are circumferential grooves (9) lying in equidistant planes perpendicular to the removal direction.

10. The method according to any one of the preceding claims 7 - 9, wherein the second shape (7) is larger than the first shape (6) by a perpendicular distance greater than the maximal groove depth (12).

11. The method according to any one of the preceding claims, wherein the step of applying a slab of reshapable material (4) on the mandrel outer surface (3) comprises applying uncured curable plastic material on the mandrel outer surface (3).

12. The method according to any one of the preceding claims, wherein the step of applying a slab of reshapable material (4) on the mandrel outer surface (3) comprises winding consecutive layers of material around the mandrel (2).

13. The method according to the preceding claim, wherein the step of applying a slab of reshapable material (4) on the mandrel outer surface (3) comprises consecutively winding at least an thermoplastic layer and a load carrying layer around the mandrel (2).

14. The method according to any one of the preceding claims 1 - 11, wherein the step of applying a slab of reshapable material (4) on the mandrel outer surface (3) comprises sliding a wound slab of reshapable material (4) over the mandrel (2) in a mounting direction, parallel to the removal direction.

15. The method according to any one of the preceding claims, wherein the step of applying a slab of reshapable material (4) on the mandrel outer surface (3) comprises making the slab of reshapable material (4) and the mandrel outer surface (3) substantially congruent.

16. The method according to any one of the preceding claims, wherein the step of creating a hollow plastic product (1) comprises providing an external shell (16) enclosing the slab of reshapable material (4) applied to the mandrel outer surface (3), the step further comprises providing heat and pressure within the external shell (16).

17. The method according to any one of the preceding claims, wherein the step of creating the hollow reshapable product (1) is followed by cutting the hollow reshapable products (1) along a set of equidistant planes perpendicular to the removal direction.

18. The method according to anyone of the preceding claims, wherein the hollow reshapable product (1) is at least one drive belt, by preference a rubber drive belt.

19. An apparatus for producing hollow reshapable products (1) according to the method of any one of the preceding claims, the apparatus comprising a mandrel (2) substantially extending in an axial direction and delimited by a mandrel outer surface (3) having in a cross-section with a plane perpendicular to the axial direction a concave first shape (6).

20. The apparatus according to the preceding claim wherein the first shape (6) of the mandrel outer surface is a circle provided with at least one indented part (8), by preference provided with at least one sinusoidal oscillation along the circumference of the circle.

21. The apparatus according to any one of the preceding claims 19 - 20, wherein the apparatus further comprises an external shell (16) configured for enclosing the mandrel (2) and configured for providing heat and pressure within the external shell (16).

**Amended claims in accordance with Rule 137(2) EPC.**

1. A method for producing annular hollow reshapable products (1), the method comprising the consecutive steps of:

    • providing a mandrel (2) substantially extending in an axial direction and delimited by a mandrel outer surface (3) having a cross-section with a plane perpendicular to the axial direction with a first arc length and a first shape (6), wherein the mandrel outer surface (3) is provided with a set of grooves (9) penetrating the mandrel outer surface (3) with a maximal groove depth (12), wherein the grooves (9) are circumferential grooves (9) lying in equidistant planes perpendicular to the axial direction,
    • applying a slab of reshapable material (4) on the mandrel outer surface (3),
    • creating an annular hollow reshapable product (1) having an inner surface (5) lying adjacent to the mandrel outer surface (3) by pressing the slab of reshapable material (4) against the mandrel outer surface (3), and
    • removing the reshapable product (1) from the mandrel (2) along a removal direction substantially parallel to the axial direction of the mandrel (2),

**characterized in that**
the step of removing the reshapable product (1) comprises the step of reshaping the reshapable product (1) by moving the reshapable product (1) away from the outer mandrel surface (3) in at least one radial direction perpendicular to the removal direction, wherein the cross-section of the inner surface (5) of the annular hollow reshapable product (1) with a plane perpendicular to the removal direction has a second arc length and a second shape (7), wherein the second arc length equals the first arc length, and wherein the second shape (7) differs from the first shape (6), wherein the second shape (7) is larger than the first shape (6) by a perpendicular distance greater than the maximal groove depth (12).

2. The method according to claim 1, wherein the annular hollow reshapable product (1) is a grooved reshapable product comprising a base part and a grooved part linked by an interface layer, wherein the interface layer is the inner surface of a grooved reshapable product.

3. The method according to any one of the preceding claims, wherein the slab of reshapable material (4) is made congruent with the mandrel outer surface (3) prior to creating the annular hollow reshapable product (1).

4. The method according to any one of the preceding claims, wherein the first shape (6) of the mandrel outer surface (3) is the same during the step of creating the annular hollow reshapable product (1) and during the step of removing the reshapable product (1).

5. The method according to anyone of the preceding claims, wherein the second shape (7) encloses the first shape (6).

6. The method according to any one of the preceding claims, wherein the first shape (6) of the mandrel outer surface (3) is a continuous shape.

7. The method according to any one of the preceding claims, wherein the first shape (6) of the mandrel outer surface (3) is concave.

8. The method according to any one of the preceding claims, wherein the first shape (6) of the mandrel outer surface (3) is a circle provided with at least one indented part (8), by preference provided with at least one sinusoidal oscillation along the circumference of the circle.

9. The method according to any one of the preceding claims, wherein the step of applying a slab of reshapable material (4) on the mandrel outer surface (3) comprises applying uncured curable plastic material on the mandrel outer surface (3).

10. The method according to the preceding claim, wherein the step of creating the annular hollow reshapable product (1) comprises curing the slab of reshapable material (4).

11. The method according to any one of the preceding claims, wherein the step of applying a slab of reshapable material (4) on the mandrel outer surface (3) comprises winding consecutive layers of material around the mandrel (2).

12. The method according to the preceding claim, wherein the step of applying a slab of reshapable material (4) on the mandrel outer surface (3) comprises consecutively winding at least an thermoplastic layer and a load carrying layer around the mandrel (2).

13. The method according to any one of the preceding claims 1 - 9, wherein the step of applying a slab of reshapable material (4) on the mandrel outer surface (3) comprises sliding a wound slab of reshapable material (4) over the mandrel (2) in a mounting direction, parallel to the removal direction.

14. The method according to any one of the preceding claims, wherein the step of applying a slab of reshapable material (4) on the mandrel outer surface (3) comprises making the slab of reshapable material (4) and the mandrel outer surface (3) substantially congruent.

15. The method according to any one of the preceding claims, wherein the step of creating a hollow plastic product (1) comprises providing an external shell (16) enclosing the slab of reshapable material (4) applied to the mandrel outer surface (3), the step further comprises providing heat and pressure within the external shell (16).

16. The method according to any one of the preceding claims, wherein the step of creating the annular hollow reshapable product (1) is followed by cutting the annular hollow reshapable products (1) along a set of equidistant planes perpendicular to the removal direction.

17. The method according to anyone of the preceding claims, wherein the annular hollow reshapable product (1) is at least one drive belt, by preference a rubber drive belt.

**18.** An apparatus for producing annular hollow reshapable products (1) according to the method of any one of the preceding claims, the apparatus comprising a mandrel (2) substantially extending in an axial direction and delimited by a mandrel outer surface (3) having in a cross-section with a plane perpendicular to the axial direction a concave first shape (6), wherein the mandrel outer surface (3) is provided with a set of grooves (9) penetrating the mandrel outer surface (3) with a maximal groove depth (12), wherein the grooves (9) are circumferential grooves (9) lying in equidistant planes perpendicular to the axial direction.

**19.** The apparatus according to the preceding claim wherein the first shape (6) of the mandrel outer surface is a circle provided with at least one indented part (8), by preference provided with at least one sinusoidal oscillation along the circumference of the circle.

**20.** The apparatus according to any one of the preceding claims 18 - 19, wherein the apparatus further comprises an external shell (16) configured for enclosing the mandrel (2) and configured for providing heat and pressure within the external shell (16).

Fig. 1

Fig. 2

*Fig.3*

*Fig.4a*

*Fig.4b*

*Fig.4c*

*Fig.4d*

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 17 20 7128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 051204 A (MITSUBOSHI BELTING LTD) 12 March 2009 (2009-03-12) * abstract; figures * | 19-21 | INV. B29D29/10 B29C33/44 B29C67/00 |
| X | EP 0 280 175 A2 (NITTA KK [JP]) 31 August 1988 (1988-08-31) | 19-21 | |
| Y | * figures * | 1-18 | |
| X | DE 20 2017 101198 U1 (WALTHER FLENDER GMBH [DE]) 20 March 2017 (2017-03-20) * figures * | 19,21 | |
| Y | RU 2004 111393 A (-) 10 October 2005 (2005-10-10) * paragraphs [0001], [0004], [0006], [0009]; figures * | 1-18 | |
| A | US 3 839 116 A (THOMAS J ET AL) 1 October 1974 (1974-10-01) * figures * | 1-21 | |
| A | US 4 908 090 A (KOZACHEVSKY GENNADY G [SU] ET AL) 13 March 1990 (1990-03-13) * figures * | 1-21 | TECHNICAL FIELDS SEARCHED (IPC) B29D B29C |

The present search report has been drawn up for all claims

| Place of search | Date of completion of the search | Examiner |
|---|---|---|
| Munich | 22 May 2018 | Kopp, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 7128

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2018

| Patent document cited in search report | | Publication date | Patent family member(s) | | Publication date |
|---|---|---|---|---|---|
| JP 2009051204 | A | 12-03-2009 | NONE | | |
| EP 0280175 | A2 | 31-08-1988 | DE | 3880710 D1 | 09-06-1993 |
| | | | DE | 3880710 T2 | 02-12-1993 |
| | | | EP | 0280175 A2 | 31-08-1988 |
| | | | US | 5066344 A | 19-11-1991 |
| DE 202017101198 | U1 | 20-03-2017 | DE 102017104402 A1 | | 07-09-2017 |
| | | | DE 202017101198 U1 | | 20-03-2017 |
| | | | WO | 2017153021 A1 | 14-09-2017 |
| RU 2004111393 | A | 10-10-2005 | | | |
| US 3839116 | A | 01-10-1974 | CA | 1041414 A | 31-10-1978 |
| | | | DK | 475774 A | 12-05-1975 |
| | | | JP | S5054756 A | 14-05-1975 |
| | | | JP | S5215310 B2 | 28-04-1977 |
| | | | NO | 743238 A | 07-04-1975 |
| | | | US | 3839116 A | 01-10-1974 |
| US 4908090 | A | 13-03-1990 | AT | 389491 B | 11-12-1989 |
| | | | DE | 3690688 C2 | 16-02-1989 |
| | | | DE | 3690688 T1 | 28-01-1988 |
| | | | FI | 874040 A | 16-09-1987 |
| | | | GB | 2192830 A | 27-01-1988 |
| | | | JP | S63502259 A | 01-09-1988 |
| | | | US | 4908090 A | 13-03-1990 |
| | | | WO | 8704660 A1 | 13-08-1987 |

EPO FORM P0459

For more details about this annex : see Official Journal of the European Patent Office, No. 12/82

**EP 3 498 463 A1**

**REFERENCES CITED IN THE DESCRIPTION**

**Patent documents cited in the description**

- CA 2929490
- EP 0625650 A
- US 4848720 A